# EUROPÄISCHE PATENTSCHRIFT

(11) **EP 1 341 357 B1**
(45) Veröffentlichungstag und Bekanntmachung des Hinweises auf die Patenterteilung: **23.08.2006**
(21) Anmeldenummer: 03100290.0
(22) Anmeldetag: 11.02.2003
(51) Int. Cl.: H04L 29/06, H04L 12/56, H04M 7/00, H04L 12/28

(54) **Verfahren zur Dienstgütesicherung in einem Kommunikationsnetz sowie Anordnung und Einrichtungen zur Realisierung des Verfahrens**
Method for securing quality of service in a communication network as well as arrangement and apparatuses to implement the method
Procédé pour sécuriser la qualité de service dans un réseau de communication, dispositif et appareils pour sa mise en oeuvre

(30) Priorität: 28.02.2002 DE 10208749
(43) Veröffentlichungstag der Anmeldung: 03.09.2003
(73) Patentinhaber: SIEMENS AKTIENGESELLSCHAFT, 80333 München (DE)
(72) Erfinder: Müller, Harald, 82205, Gilching (DE); Totzke, Jürgen, 85586, Poing (DE)

(56) Entgegenhaltungen:
- EDITOR: "Telecommunications and Internet Protocol Harmonization Over Networks (TIPHON) Release 3; End-to-end Quality of Service in TIPHON systems; Part 3: Signalling and control of end-to-end Quality of Service (QoS); ETSI TS 101 329-3" ETSI STANDARDS, EUROPEAN TELECOMMUNICATIONS STANDARDS INSTITUTE, SOPHIA-ANTIPO, FR, Bd. TIPHON-5, Nr. V212, Januar 2002 (2002-01), Seiten 1-45, XP014006057 ISSN: 0000-0001
- Y. BERNET; P. FORD; MICROSOFT; R. YAVATKAR; INTEL; F. BAKER; CISCO; L. ZHANG; UCLA; M. SPEER; SUN MICROSYSTEMS; R. BRADEN; ISI: "RFC 2998: A Framework for Integrated Services Operation over Diffserv Networks" IETF RFC REQUEST FOR COMMENTS, November 2000 (2000-11), Seiten 1-31, XP015008781
- BUCKLEY M: "H.323 Annex N: End-to-End QoS and Service Priority Control and Signalling in H.323 Systems" ITU-T DRAFT RECOMMENDATION, 28. Mai 2001 (2001-05-28), Seiten 1-56, XP002300862
- L-N. HAMER; B. GAGE; NORTEL NETWORKS; B. KOSINSKI; UNIVERSITY OF ALBERTA; HUGH SHIEH; AT&T WIRELESS: "draft-ietf-rap-rsvp-authsession-01.txt: Session Authorization Policy Element" IETF INTERNET DRAFT, November 2001 (2001-11), Seiten 1-15, XP002300863
- L-N. HAMER; B. GAGE; NORTEL NETWORKS; HUGH SHIEH; AT&T WIRELESS: "draft-ietf-rap-session-auth-02: Framework for session set-up with media authorization" IETF INTERNET DRAFT, November 2001 (2001-11), Seiten 1-25, XP002300864
- SCHULZRINNE/CASNER/FREDERICK/JACOBSON COLUMBIA U./PACKET DESIGN/ CACHEFLOW/PACKET DESIGN: "draft-ietf-avt-rtp-new-11.txt: RTP: A Transport Protocol for Real-Time Applications" IETF INTERNET DRAFT, 20. November 2001 (2001-11-20), Seiten 1-51, XP015001411

## Beschreibung

In zeitgemäßen Kommunikationssystemen werden Kommunikationsverbindungen, z.B. zur Sprach-, Video- oder Multimediakommunikation, in zunehmendem Maße auch über paketorientierte Kommunikationsnetze, wie z.B. lokale Netze (LAN: Local Area Network) oder Weitverkehrsnetze (WAN: Wide Area Network), geführt. Auf dieser Technik basiert beispielsweise die sogenannte Internettelefonie, die häufig auch als VoIP-Telefonie (VoIP: Voice/Video over Internet Protocol) bezeichnet wird.

Eine wichtige Eigenschaft einer Kommunikationsverbindung ist die sogenannte Dienstgüte. Die Dienstgüte einer Kommunikationsverbindung wird häufig auch als Quality-of-Service (QoS) bezeichnet und kann unterschiedliche Übertragungs- oder Verbindungseigenschaften betreffen, wie z.B. die Übertragungsbandbreite, eine Übertragungsfehlerrate, eine Übertragungsverzögerung oder andere Übertragungs- oder Dienstgüteressourcen.

Zur Sicherung einer vorgegebenen Dienstgüte werden häufig sogenannte Ressourcenmanager eingesetzt. Diese sind jeweils einem Kommunikationsnetz oder einem Teilnetz zugeordnet und verwalten dessen jeweilige Übertragungs- bzw. Dienstgüteressourcen. Bei einem Ressourcenmanager können für aufzubauende Verbindungen jeweils vorgebbare Übertragungs- bzw. Dienstgüteressourcen verbindungsspezifisch reserviert werden, die üblicherweise in Dienstgüteklassen oder Verkehrsklassen eingeteilt sind. Zur Reservierung von Übertragungs- bzw. Dienstgüteressourcen wird von einer eine Verbindung initiierenden eintrifft. Um zu vermeiden, dass ein derartiger Kommunikationsdatenstrom einer Dienstgüteklasse zugewiesen wird und damit unzulässigerweise Ubertragungsbandbreite belegt, wird bei bekannten Verfahren zur Dienstgütesicherung von der Netzzugangseinrichtung eine Analyse des verwendeten Signalisierungsprotokolls durchgeführt.

Eine solche Protokollanalyse erfordert jedoch eine Verwaltung von verbindungs- und kontextabhängigen Zuständen für alle im Rahmen von Verbindungen eintreffenden Datenpakete und ist somit sowohl sehr aufwändig als auch fehleranfällig.

Es ist Aufgabe der vorliegenden Erfindung ein weniger aufwändiges Verfahren zur Dienstgütesicherung für Kommunikationsdatenströme in einem Kommunikationsnetz anzugeben. Es ist weiterhin Aufgabe der Erfindung Anordnungen zur Realisierung des Verfahrens anzugeben.

Gelöst wird diese Aufgabe durch ein Verfahren mit den Merkmalen des Patentanspruchs 1, durch eine Netzzugangseinrichtung nach Patentanspruch 15, durch einen Ressourcenmanager nach Patentanspruch 16 und durch eine Kommunikationseinrichtung nach Patentanspruch 17.

Gemäß dem erfindungsgemäßen Verfahren wird mit einem von einer Kommunikationseinrichtung, z.B. einer Kommunikationsendeinrichtung, einer Kommunikationsanwendung oder einem Kommunikationsclient zu einer Netzzugangseinrichtung eines Kommunikationsnetzes im Rahmen einer zugelassenen Kommunikationsverbindung übertragenen Kommunikationsdatenstrom eine Dienstgüteinformation sowie eine dienstgütespezifische, datenstromspezifische und/oder kommunikationseinrichtungsspezifische Autorisierungsinformation übermittelt. Die Netzzugangsein Endeinrichtung eine Dienstgüteanforderung zum Ressourcenmanager übermitteltDieser überprüft die Verfügbarkeit der angeforderten Übertragungs- bzw. Dienstgüteressourcen und lässt abhängig davon die betreffende Verbindung entweder zu oder weist die Verbindung zurück.

Nach Zulassung der Verbindung kann die Endeinrichtung einen der angeforderten Dienstgüteklasse zugeordneten Kommunikationsdatenstrom zu einer Netzzugangseinrichtung des Kommunikationsnetzes übertragen. Die Netzzugangseinrichtung weist den Kommunikationsdatenstrom der angeforderten Dienstgüteklasse zu und leitet ihn dann in dieser Dienstgüteklasse über das Kommunikationsnetz weiter.

Ein derartiges Verfahren zur Dienstgütesignalisierung ist aus der Druckschrift "Telecommunications and Internet Protocol Harmonization Over Networks (TIPHON) Release 3; End-to-end Quality of Service in TIPHON systems; Part 3: Signalling and control of end-to-end Quality of Service (QoS)", ETSI TS 101 329-3 des European Telecommunications Standards Institute (ETSI) vom Januar 2002 bekannt.

Aus dem Internet-Draft "Framework for session set-up with media authorization" der RAP Working Group der Internet Engineering Task Force(IETF) vom November 2001 ist weiter ein Autorisierungsverfahren zur Berechtigungsüberprüfung von Dienstgüteanforderungen bekannt.

Da ein Kommunikationsnetz häufig auch Verbindungen von netzfremden Endeinrichtungen oder Kommunikationsanwendungen weiterleitet, kann im Allgemeinen nicht ausgeschlossen werden, dass ein Kommunikationsdatenstrom einer vom Ressourcenmanager nicht zugelassenen Verbindung bei der Netzzugangseinrichtung richtung kann hierbei z.B. eine Netzübergangseinrichtung (Gateway), ein sogenanntes Edge-Device, eine Switch- oder Routereinrichtung oder eine sogenannte Firewall sein. Die übermittelte Autorisierungsinformation wird durch die Netzzugangseinrichtung geprüft, und abhängig vom Prüfungsergebnis wird der Kommunikationsdatenstrom durch die Netzzugangseinrichtung einer anhand der Dienstgüteinformation ermittelten Dienstgüteklasse zugeordnet und über das Kommunikationsnetz weitergeleitet.

Mittels des erfindungsgemäßen Verfahrens kann durch die Netzzugangseinrichtung auf sehr einfache Weise anhand der Autorisierungsinformation ermittelt werden, ob ein eintreffender Kommunikationsdatenstrom für die durch die Dienstgüteinformation identifizierte Dienstgüteklasse zugelassen oder autorisiert ist. Das Verfahren erfordert von der Netzzugangseinrichtung keine zustands- oder kontextabhängige Verwaltung von Verbindungen.

Vorteilhafte Ausführungsformen und Weiterbildungen der Erfindung sind in den abhängigen Ansprüchen angegeben.

Gemäß einer vorteilhaften Weiterbildung der Erfindung kann die zu übermittelnde Autorisierungsinformation durch einen Dienstgüteressourcen des Kommunikationsnetzes verwaltenden Ressourcenmanager zur Kommunikationseinrichtung übertragen werden, falls eine Dienstgüteanforderung der Kommunikationseinrichtung vom Ressourcenmanager zugelassen wird. Die Autorisierungsinformation kann vorzugsweise in einer die Dienstgüteanforderung bestätigenden Bestätigungsmeldung vom Ressourcenmanager zur Kommunikationseinrichtung übertragen werden. Auf diese Weise kann durch den Ressourcenmanager der Kommunikationseinrichtung eine Autorisierungsinformation statisch oder dynamisch zugewiesen werden. Die Autorisierungsinformation kann durch den Ressourcenmanager auch zur Netzzugangseinrichtung übertragen werden, so dass diese die mit dem Kommunikationsdatenstrom übermittelte Autorisierungsinformation anhand der vom Ressourcenmanager empfangenen Autorisierungsinformation auf einfache Weise prüfen kann. Die Autorisierungsinformation kann vom Ressourcenmanager oder von der Netzzugangseinrichtung auch zu einer weiteren Netzzugangseinrichtung, z.B. einer Firewall, auf einem Leitweg des Kommunikationsdatenstroms übermittelt werden. Damit kann auch die weitere Netzzugangseinrichtung auf einfache Weise eine Autorisierungsprüfung vornehmen.

Weiterhin kann durch den Ressourcenmanager abhängig von einer Änderung aktuell angeforderter und/oder verfügbarer Dienstgüteressourcen eine geänderte Autorisierungsinformation übertragen werden. So kann beispielsweise, falls sich bei bestehender Verbindung die verfügbaren Dienstgüteressourcen ändern, durch den Ressourcenmanager eine entsprechend geänderte Autorisierungsinformation dynamisch vergeben werden. Abhängig von der geänderten Autorisierungsinformation kann die Netzzugangseinrichtung dem Kommunikationsdatenstrom eine andere Dienstgüteklasse zuordnen oder die Art der Weiterleitung ändern.

Darüber hinaus kann nach Abbau des Kommunikationsdatenstroms die Autorisierungsinformation als ungültig registriert werden. Auf diese Weise kann eine spätere missbräuchliche Verwendung einer vergebenen Autorisierungsinformation verhindert werden.

Nach weiteren vorteilhaften Ausgestaltungsformen der Erfindung kann eine dienstgütespezifische, datenstromspezifische und/oder kommunikationseinrichtungsspezifische Autorisierungsinformation übertragen und durch die Netzzugangseinrichtung dienstgütespezifisch, datenstromspezifisch und/oder kommunikationseinrichtungsspezifisch geprüft werden. Damit können beispielsweise verbindungsspezifische, rufspezifische bzw. endeinrichtungsspezifische Autorisierungsinformationen zugewiesen werden. Auf diese Weise kann z.B. vertrauenswürdigen Endeinrichtungen jeweils eine endeinrichtungsspezifische Autorisierungsinformation fest zugeordnet werden.

Nach einer weiteren vorteilhaften Ausführungsform der Erfindung kann die Autorisierungsinformation mittels eines z.B. durch Verschlüsselung gesicherten Übertragungsprotokolls vom Ressourcenmanager zur Kommunikationseinrichtung übertragen werden. Auf diese Weise kann eine missbräuchliche Verwendung einer Autorisierungsinformation durch nichtautorisierte Kommunikationseinrichtungen verhindert werden. Nach einer weiteren vorteilhaften Weiterbildung der Erfindung kann anstelle der Autorisierungsinformation jeweils eine Signaturschlüsselinformation vom Ressourcenmanager zur Kommunikationseinrichtung und zur Netzzugangseinrichtung übermittelt werden. Die Kommunikationseinrichtung berechnet dann die zu übermittelnde Autorisierungsinformation durch Verknüpfung der von ihr empfangenen Signaturschlüsselinformation mit zur Netzzugangseinrichtung zu übertragenden Daten. Vorzugsweise kann hierbei die Signaturschlüsselinformation mit einem oder mehreren Feldern eines jeweiligen Paketkopfs eines zur Netzzugangseinrichtung zu übertragenden Datenpakets verknüpft werden. Die Netzzugangseinrichtung kann die übermittelte Autorisierungsinformation anhand der von ihr selbst empfangenen Signaturschlüsselinformation prüfen. Zur weiteren Erhöhung der Sicherheit kann in die Berechnung der Autorisierungsinformation eine Zeitinformation, z.B. ein Zeitstempel in einem Paketkopf mit eingehen.

Nach einer weiteren vorteilhaften Ausführungsform kann die Autorisierungsinformation innerhalb eines Paketkopfes oder innerhalb einer Paketkopferweiterung eines Datenpaktes des Kommunikationsdatenstroms übermittelt werden. Insbesondere kann durch ein Flag im Paketkopf des Datenpaketes angezeigt werden, ob der Paketkopf oder die Paketkopferweiterung eine Autorisierungsinformation enthält.

Vorzugsweise kann die Autorisierungsinformation in einer standardisierten Paketkopferweiterung des RTP-Protokolls (RTP: Real Time Protocol) übermittelt werden. Vorteilhafterweise kann durch eine Autorisierung des Kommunikationsdatenstroms gemäß dem RTP-Protokoll auch ein dem Kommunikationsdatenstrom zugeordneter Datenstrom gemäß dem RTCP-Protokoll (RTCP: Real Time Control Protocol) autorisiert werden.

Gemäß einer weiteren vorteilhaften Weiterbildung der Erfindung kann eine mit dem Kommunikationsdatenstrom übertragene Dienstgüteinformation abhängig von der Prüfung der Autorisierungsinformation überschrieben werden. So kann z.B. die Dienstgüteinformation eines durch die Netzzugangseinrichtung als nicht autorisiert erkannten Kommunikationsdatenstroms derart geändert werden, dass auch auf dem Leitweg nachfolgende Netzwerkeinrichtungen, bei denen das erfindungsgemäße Verfahren nicht implementiert ist, keine nicht autorisierten Dienstgüteklassen zuordnen.

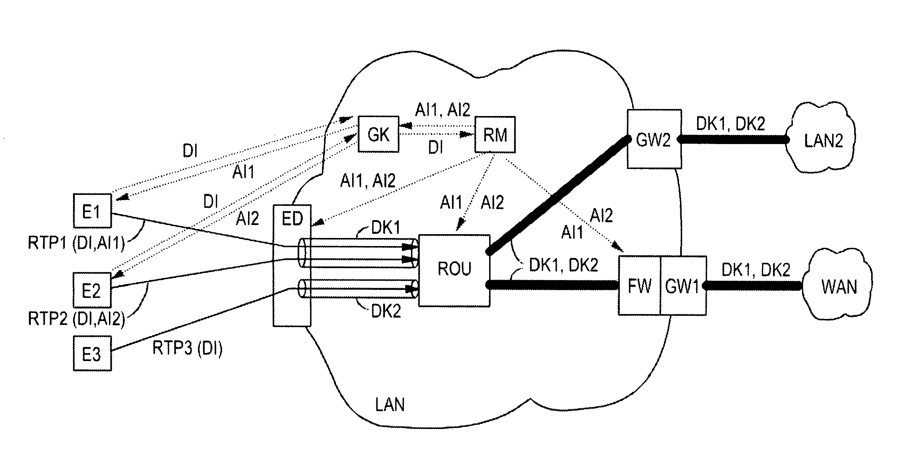

Ein Ausführungsbeispiel der Erfindung wird nachfolgend anhand der Zeichnung näher erläutert.
Die Figur zeigt ein Kommunikationssystem mit mehreren an ein Kommunikationsnetz angekoppelten Endeinrichtungen in schematischer Darstellung

In der Figur ist ein Kommunikationssystem mit einem lokalen Netz LAN, an das mehrere Endeinrichtungen E1, E2 und E3 angekoppelt sind, schematisch dargestellt. Das lokale Netz LAN ist im vorliegenden Ausführungsbeispiel als paketorientiertes Kommunikationsnetz zur Sprach-, Video- und/oder Multimediakommunikation gemäß der ITU-T-Empfehlung H.323 ausgestaltet. Alternativ dazu kann im lokalen Netz LAN das IETF-Standardprotokoll SIP (Session Initiation Protocol) zur Sprach-, Video- und/oder Multimediakommunikation implementiert sein. Das lokale Netz ist über eine Netzübergangseinrichtung GW1 an ein Weitverkehrsnetz WAN, z.B. das Internet, und über eine weitere Netzübergangseinrichtung GW2 an ein weiteres lokales Netz LAN2 gekoppelt. Zur Absicherung des lokalen Netzes LAN gegenüber unbefugten Zugriffen aus dem Weitverkehrsnetz WAN ist bei der Netzübergangseinrichtung GW1 eine sog. Firewall FW angeordnet.

Im vorliegenden Ausführungsbeispiel sind die Endeinrichtungen E1, E2 und E3 über eine Netzzugangseinrichtung ED, z.B. ein sog. Edge-Device, des lokalen Netzes LAN an dieses gekoppelt. Die Endeinrichtungen E1, E2 und E2 können hierbei z.B. als Endgeräte zur Sprach-, Video- und/oder Multimediakommunikation, als Personalcomputer oder als Kommunikationsanwendungen oder Kommunikationsclients realisiert sein.

Weiterhin weist das lokale Netz LAN eine Routereinrichtung ROU zur Datenpaketvermittlung, insbesondere zwischen der Netzzugangseinrichtung ED und den Netzübergangseinrichtungen GW1 und GW2, sowie einen sog. Gatekeeper GK zur Verbindungssteuerung gemäß der H.323-Empfehlung auf.

Die Netzzugangseinrichtung ED bildet einen Netzzugang für externe Kommunikationseinrichtungen, hier E1, E2 und E3. Im vorliegenden Ausführungsbeispiel wird von den Endeinrichtungen E1, E2 und E3 jeweils eine Kommunikationsverbindung in das lokale Netz LAN aufgebaut. Im Rahmen dieser Kommunikationsverbindungen werden von der Endeinrichtung E1 ein Kommunikationsdatenstrom RTP1, von der Endeinrichtung E2 ein Kommunikationsdatenstrom RTP2 und von der Endeinrichtung E3 ein Kommunikationsdatenstrom RTP3 zur Netzzugangseinrichtung ED übertragen. Es sei hierbei angenommen, dass die Übertragung der Kommunikationsdatenströme RTP1, RTP2 und RTP3 gemäß dem sog. RTP-Protokoll (Real Time Protocol) mittels sog. RTP-Datenpakete erfolgt.

Die Netzzugangseinrichtung ED ordnet die von den Endeinrichtungen E1, E2 und E3 ausgehenden Kommunikationsdatenströme RTP1, RTP2 und RTP3 jeweils einer spezifischen Dienstgüteklasse, hier DK1 oder DK2, zu und leitet die Kommunikationsdatenströme RTP1, RTP2 und RTP3 in der jeweils zugeordneten Dienstgüteklasse DK1 bzw. DK2 zur Routereinrichtung ROU weiter. Den verschiedenen Dienstgüteklassen DK1 und DK2 sind jeweils ein spezifisches Übertragungsverhalten (per hop behavior) sowie spezifische Dienstgüteressourcen zugeordnet. Für das vorliegende Ausführungsbeispiel sei angenommen, dass die Dienstgüteklasse DK1 eine zur Echtzeitübertragung von Kommunikationsdatenströmen ausreichende Übertragungsbandbreite garantiert, während die Dienstgüteklasse DK2 nur eine niederpriore, die Übertragungsressourcen der Dienstgüteklasse DK1 nicht schmälernde Übertragung bereitstellt.

Auch eine weitere Datenübertragung von der Routereinrichtung ROU über die Netzübergangseinrichtung GW2 ins Weitverkehrsnetz WAN bzw. von der Routereinrichtung ROU über die Netzübergangseinrichtung GW1 ins lokale Netz LAN2 basiert - wie durch verdickte Linien angedeutet - auf den Dienstgüteklassen DK1 und DK2. Außer den Dienstgüteklassen DK1 und DK2 werden im vorliegenden Ausführungsbeispiel aus Übersichtlichkeitsgründen keine weiteren Dienstgüteklassen berücksichtigt.

Die Dienstgüteklasse DK1 wird im lokalen Netz LAN durch einen Ressourcenmanager RM des lokalen Netzes LAN verwaltet. Der Ressourcenmanager RM überwacht zu diesem Zweck insbesondere die in der Dienstgüteklasse DK1 aktuell verfügbaren Dienstgüteressourcen, wie z.B. die jeweils aktuell verfügbare Übertragungsbandbreite. Der Ressourcenmanager RM ist mit dem Gatekeeper GK mittels eines Signalisierungsprotokolls gekoppelt. Über den Gatekeeper GK wird ein Austausch von Signalisierungsinformation zwischen dem Ressourcenmanager RM und an das lokale Netz LAN angekoppelten Endeinrichtungen vermittelt. Ein jeweiliger Signalisierungsverkehr ist in der Figur durch punktierte Pfeile angedeutet.

Im Rahmen des Aufbaus der von den Endeinrichtungen E1 und E2 ausgehenden Kommunikationsverbindungen übermitteln die Endeinrichtungen E1 und E2 jeweils eine Dienstgüteinformation DI innerhalb einer Dienstgüteanforderungsmeldung über den Gatekeeper GK zum Ressourcenmanager RM. Die Dienstgüteinformation DI kann hierbei z.B. einen Bandbreitenbedarf oder einen Verbindungs- oder Medientyp der aufzubauenden Kommunikationsverbindung betreffen. Im vorliegenden Ausführungsbeispiel sei angenommen, dass beide Endeinrichtungen E1 und E2 die gleiche Dienstgüteinformation DI übermitteln, durch die für die jeweils betreffende Kommunikationsverbindung die Dienstgüteklasse DK1 angefordert wird.

Dagegen übermittelt die Endeinrichtung E3 im vorliegenden Ausführungsbeispiel keine Dienstgüteinformation zum Ressourcenmanager RM, z.B. weil das hierfür verwendete Signalisierungsprotokoll auf der Endeinrichtung E3 nicht implementiert ist oder von der Endeinrichtung E3 ignoriert wird.

Nach Empfang der Dienstgüteanforderungsmeldungen prüft der Ressourcenmanager RM die Verfügbarkeit der jeweils angeforderten Dienstgüte entlang des zu erwertenden Leitwegs einer jeweiligen Kommunikationsverbindung. Falls die angeforderte Dienstgüte verfügbar ist, wird die betreffende Kommunikationsverbindung vom Ressourcenmanager zugelassen; andernfalls zurückgewiesen. Sofern eine Kommunikationsverbindung zugelassen wird, übermittelt der Ressourcenmanager RM eine Autorisierungsinformation über den Gatekeeper GK zu der diese Kommunikationsverbindung initiierenden Kommunikationseinrichtung. Im vorliegenden Ausführungsbeispiel werden die von den Endeinrichtungen E1 und E2 initiierten Kommunikationsverbindungen zugelassen, infolgedessen vom Ressourcenmanager RM eine Autorisierungsinformation AI1 zur Endeinrichtung E1 und eine Autorisierungsinformation AI2 zur Endeinrichtung E2 übermittelt werden. Die Autorisierungsinformationen AI1 und AI2 werden vom Ressourcenmanager RM in dynamischer Weise jeweils verbindungsspezifisch und/oder dienstgütespezifisch vergeben. Vorzugsweise wird eine jeweilige Autorisierungsinformation AI1 bzw. AI2 mit einer jeweiligen Bestätigungsmeldung für die Dienstgüteanforderungsmeldungen auf Signalisierungsebene zu einer jeweiligen Endeinrichtung E1 bzw. E2 übermittelt.

Parallel dazu werden die Autorisierungsinformationen AI1 und AI2 vom Ressourcenmanager RM zur Netzzugangseinrichtung ED, zur Routereinrichtung ROU und zur Firewall FW übermittelt.

Da die Endeinrichtung E3 keine Dienstgüteanforderung zum Ressourcenmanager RM übermittelt hat, verfügt die Endeinrichtung E3 über keine Autorisierungsinformation. Der von der Endeinrichtung E3 ausgehende Kommunikationsdatenstrom RTP3 ist also gewissermaßen nicht für eine Dienstgüteklasse autorisiert.

Die Endeinrichtungen E1 und E2 übertragen nach Empfang der Autorisierungsinformationen AI1 und AI2 die Kommunikationsdatenströme RTP1 und RTP2 zur Netzzugangseinrichtung ED. Mit einem jeweiligen Kommunikationsdatenstrom RTP1 bzw. RTP2 wird dabei die Dienstgüteinformation DI sowie die jeweilige Autorisierungsinformation AI1 bzw. AI2 übertragen.

Vorzugsweise wird die Autorisierungsinformation AI1 bzw. AI2 in einer standardisierten Paketkopferweiterung jedes RTP-Datenpakets des betreffenden Kommunikationsdatenstroms RTP1 bzw. RTP2 übermittelt. Gemäß dem RTP-Protokoll wird ein Vorhandensein einer Paketkopferweiterung durch ein Flag, das sog. X-Flag, im normalen Paketkopf eines RTP-Datenpakets angezeigt. Die standardisierte Paketkopferweiterung umfasst eine Kennung (extension identifier), ein Längenfeld (length field) und ein Inhaltsfeld (content field). Eine jeweilige Kennung kann bei einer dafür zuständigen, zentralen Organisation registriert werden. Die Autorisierungsinformation AI1 bzw. AI2 kann innerhalb des Inhaltsfeldes der Paketkopferweiterung übermittelt werden. Alternativ dazu kann die Kennung selbst als Autorisierungsinformation genutzt werden. In diesem Fall wird das Längenfeld auf 0 gesetzt. Die als Autorisierungsinformation genutzte Kennung kann z.B. dazu verwendet werden, vertrauenswürdige Datenquellen zu identifizieren. Durch eine derartige, sehr einfache Identifizierung vertrauenswürdiger Datenquellen kann häufig auf eine aufwendige Implementierung sogenannter Token-Bucket-Filter in der Netzzugangseinrichtung ED, den Netzübergangseinrichtungen GW1, GW2 oder der Firewall FW verzichtet werden.

Anders als die Endeinrichtungen E1 und E2 übermittelt die Endeinrichtung E3 mit dem von ihr zur Netzzugangseinrichtung ED übertragenen Kommunikationsdatenstrom RTP3 keine Autorisierungsinformation, sondern nur die Dienstgüteinformation DI. Durch die Dienstgüteinformation DI wird für den Kommunikationsdatenstrom RTP3 implizit die Dienstgüteklasse DK1 angefordert.

In der Netzzugangseinrichtung ED wird für alle eintreffenden Kommunikationsdatenströme RTP1, RTP2 und RTP3 geprüft, ob mit diesen eine Autorisierungsinformation übermittelt wird. Darüber hinaus wird der Wert jeder übermittelten Autorisierungsinformation AI1 bzw. AI2 überprüft. Unterschiedliche Werte von Autorisierungsinformationen können hierbei sehr effizient z.B. mittels einer sog. Hash-Tabelle ausgewertet werden. Nach erfolgter Prüfung werden die Kommunikationsdatenströme RTP1, RTP2 und RTP3 jeweils abhängig vom Prüfungsergebnis einer Dienstgüteklasse, hier DK1 bzw. DK2, zugeordnet und zur Routereinrichtung ROU weitergeleitet.

Im vorliegenden Ausführungsbeispiel werden die mit den Kommunikationsdatenströmen RTP1 und RTP2 übertragenen Autorisierungsinformationen AI1 und AI2 durch die Netzzugangseinrichtung ED mit den vom Ressourcenmanager RM empfangenen Autorisierungsinformationen AI1 und AI2 verglichen und als übereinstimmend erkannt. Infolge dieser Übereinstimmung werden die betreffenden Kommunikationsdatenströme RTP1 und RTP2 der durch die mitübertragene Dienstgüteinformation DI implizit angeforderten Dienstgüteklasse DK1 zugeordnet und in dieser zur Routereinrichtung ROU weitergeleitet.

Dagegen wird im Kommunikationsdatenstrom RTP3 durch die Netzzugangseinrichtung ED keine Autorisierungsinformation aufgefunden. Infolgedessen wird der Kommunikationsdatenstrom RTP3 nicht der durch die mitübertragene Dienstgüteinformation DI implizit angeforderten Dienstgüteklasse DK1, sondern der niederprioren Dienstgüteklasse DK2 zugeordnet. Durch die Zuordnung des Kommunikationsdatenstroms RTP3 zur Dienstgüteklasse DK2 werden die Übertragungsressourcen der Dienstgüteklasse DK1 nicht verringert, so dass diese Übertragungsressourcen den autorisierten Kommunikationsdatenströmen RTP1 und RTP2 vollständig zur Verfügung stehen.

Der Kommunikationsdatenstrom RTP3 wird von der Netzzugangseinrichtung ED in der Dienstgüteklasse DK2 zur Routereinrichtung ROU weitergeleitet. Dabei wird mit dem Kommunikationsdatenstrom RTP3 eine geänderte Dienstgüteinformation (nicht dargestellt) zur Routereinrichtung ROU übermittelt. Durch die geänderte Dienstgüteinformation wird implizit die Dienstgüteklasse DK2 angefordert. Damit kann auf effektive Weise verhindert werden, dass dem nicht autorisierten Kommunikationsdatenstrom RTP3 durch Netzwerkeinrichtungen, die nicht nach dem erfindungsgemäßen Verfahren betrieben werden, Dienstgüteressourcen unzulässigerweise zugewiesen werden.

Anhand der mit den Kommunikationsdatenströmen RTP1 und RTP2 übermittelten Autorisierungsinformationen AI1 und AI2 können sowohl die Netzzugangseinrichtung ED als auch die Routereinrichtung ROU und die Firewall FW die autorisierten Kommunikationsdatenströme, hier RTP1 und RTP2, von nicht autorisierten Datenströmen, hier RTP3, auf sehr einfache Weise unterscheiden. Die genannte Unterscheidung kann anhand einer zustandslosen Prüfung auf der Basis jedes einzelnen RTP-Datenpakets durchgeführt werden und ist damit wesentlich weniger zeitaufwendig als Verfahren mit Zustands- oder Kontextverwaltung gemäß dem Stand der Technik. Eine jeweils angeforderte Dienstgüte oder ein angeforderter Dienst wird dann nur für die autorisierten Kommunikationsdatenströme, hier RTP1 und RTP2, gewährt. Insbesondere können auf diese Weise Dienstgüteanforderungen von Datenstromquellen zurückgewiesen werden, die das verwendete Dienstgüteprotokoll nicht korrekt unterstützen oder missbräuchlich verwenden. Damit kann sichergestellt werden, dass Dienstgüteressourcen der vom Ressourcenmanager RM verwalteten Dienstgüteklassen nicht unzulässigerweise durch unautorisierte Datenströme belegt werden.

Nach einer Verfahrensvariation kann anstelle einer jeweiligen Autorisierungsinformation AI1 bzw. AI2 eine spezifische Signaturschlüsselinformation vom Ressourcenmanager RM zu einer jeweiligen Endeinrichtung E1 bzw. E2 übertragen werden. Die eigentliche Autorisierungsinformation AI1 bzw. AI2 wird dann durch die betreffende Endeinrichtung E1 bzw. E2 durch Verknüpfung der Signaturschlüsselinformation mit Feldern des Paketkopfs eines jeweiligen RTP-Datenpakets, z.B. mittels einer sog. Hash-Funktion, berechnet. Vorzugsweise ist in diese Berechnung ein jeweils aktueller Zeitstempel mit einzubeziehen.

Es sei schließlich noch angemerkt, dass im Sinne der Erfindung auch die Netzübergangseinrichtungen GW1 und GW2, die Routereinrichtung ROU sowie die Firewall FW als Netzzugangseinrichtungen - je nach Sichtweise - zu den Netzen LAN2, WAN oder LAN aufgefasst werden können. In jeder der genannten Netzwerkeinrichtungen GW1, GW2, ROU und FW kann die erfindungsgemäße Prüfung einer Autorisierungsinformation erfolgen und abhängig davon einem Kommunikationsdatenstrom eine Dienstgüteklasse und/oder ein Leitweg zugeordnet werden.

## Patentansprüche

1. Verfahren zur Dienstgütesicherung für Kommunikationsdatenströme in einem Kommunikationsnetz (LAN), wobei
a) mit einem von einer Kommunikationseinrichtung (E1, E2, E3) zu einer Netzzugangseinrichtung (ED) des Kommunikationsnetzes (LAN) im Rahmen einer zugelassenen Kommunikationsverbindung übertragenen Kommunikationsdatenstrom (RTP1, RTP2, RTP3) eine Dienstgüteinformation (DI) sowie eine dienstgütespezifische, datenstromspezifische und/oder kommunikationseinrichtungsspezifische Autorisierungsinformation (AI1, AI2) übermittelt wird,
b) die Autorisierungsinformation (AI1, AI2) durch die Netzzugangseinrichtung (ED) geprüft wird, und
c) der Kommunikationsdatenstrom (RTP1, RTP2, RTP3) abhängig vom Prüfungsergebnis durch die Netzzugangseinrichtung (ED) einer anhand der Dienstgüteinformation (DI) ermittelten Dienstgüteklasse (DK1, DK2) zugeordnet und über das Kommunikationsnetz (LAN) weitergeleitet wird.

2. Verfahren nach Anspruch 1,
**dadurch gekennzeichnet,**
**dass** die zu übermittelnde Autorisierungsinformation (AI1, AI2) durch einen Dienstgüteressourcen des Kommunikationsnetzes (LAN) verwaltenden Ressourcenmanager (RM) zur Kommunikationseinrichtung (E1, E2, E3) übertragen wird, falls eine Dienstgüteanforderung der Kommunikationseinrichtung (E1, E2, E3) vom Ressourcenmanager (RM) zugelassen wird.

3. Verfahren nach Anspruch 2,
**dadurch gekennzeichnet,**
**dass** die Autorisierungsinformation (AI1, AI2) durch den Ressourcenmanager (RM) auch zur Netzzugangseinrichtung (ED) übertragen wird, und
**dass** die Netzzugangseinrichtung (ED) die mit dem Kommunikationsdatenstrom (RTP1, RTP2, RTP3) übermittelte Autorisierungsinformation anhand der vom Ressourcenmanager (RM) übertragenen Autorisierungsinformation prüft.

4. Verfahren nach Anspruch 2 oder 3,
**dadurch gekennzeichnet,**
**dass** durch den Ressourcenmanager (RM) abhängig von einer Änderung aktuell angeforderter und/oder verfügbarer Dienstgüteressourcen eine geänderte Autorisierungsinformation übertragen wird.

5. Verfahren nach einem der vorhergehenden Ansprüche,
**dadurch gekennzeichnet,**
**dass** nach Abbau des Kommunikationsdatenstroms (RTP1, RTP2, RTP3) die Autorisierungsinformation (AI1, AI2) als ungültig registriert wird.

6. Verfahren nach einem der vorhergehenden Ansprüche,
**dadurch gekennzeichnet,**
**dass** die übertragene dienstgütespezifische, datenstromspezifische und/oder kommunikationseinrichtungsspezifische Autorisierungsinformation (AI1, AI2) durch die Netzzugangseinrichtung (ED) dienstgütespezifisch, datenstromspezifisch und/oder kommunikationseinrichtungsspezifisch geprüft wird.

7. Verfahren nach einem der Ansprüche 2 bis 6,
**dadurch gekennzeichnet,**
**dass** die Autorisierungsinformation (AI1, AI2) mittels eines gesicherten Übertragungsprotokolls vom Ressourcenmanager (RM) zur Kommunikationseinrichtung (E1, E2, E3) übertragen wird.

8. Verfahren nach einem der Ansprüche 2 bis 7,
**dadurch gekennzeichnet**,
a) dass anstelle der Autorisierungsinformation jeweils eine Signaturschlüsselinformation vom Ressourcenmanager (RM) zur Kommunikationseinrichtung (E1, E2, E3) und zur Netzzugangseinrichtung (ED) übermittelt wird,
b) dass die Kommunikationseinrichtung (E1, E2, E3) die zu übermittelnde Autorisierungsinformation (AI1, AI2) durch Verknüpfung der von ihr empfangenen Signaturschlüsselinformation mit zur Netzzugangseinrichtung (ED) zu übertragenden Daten berechnet, und
c) dass die Netzzugangseinrichtung (ED) die übermittelte Autorisierungsinformation (AI1, AI2) anhand der von ihr empfangenen Signaturschlüsselinformation prüft.

9. Verfahren nach Anspruch 8,
**dadurch gekennzeichnet,**
**dass** in die Berechnung der Autorisierungsinformation (AI1, AI2) eine Zeitinformation mit eingeht.

10. Verfahren nach einem der vorhergehenden Ansprüche,
**dadurch gekennzeichnet,**
**dass** die Autorisierungsinformation (AI1, AI2) innerhalb eines Paketkopfs eines Datenpakets des Kommunikationsdatenstroms (RTP1, RTP2, RTP3) übermittelt wird.

11. Verfahren nach Anspruch 10,
**dadurch gekennzeichnet,**
**dass** durch ein Flag im Paketkopf des Datenpakets angezeigt wird, ob der Paketkopf eine Autorisierungsinformation enthält.

12. Verfahren nach Anspruch 11,
**dadurch gekennzeichnet,**
**dass** die Autorisierungsinformation (AI1, AI2) in einer standardisierten Paketkopferweiterung des RTP-Protokolls, RTP: Real Time Protocol , übermittelt wird.

13. Verfahren nach Anspruch 12,
**dadurch gekennzeichnet,**
**dass** durch eine Autorisierung des Kommunikationsdatenstroms gemäß dem RTP-Protokoll auch ein dem Kommunikationsdatenstrom zugeordneter Datenstrom gemäß dem RTCP-Protokoll, RTCP: Real Time Control Protocol, autorisiert wird.

14. Verfahren nach einem der vorhergehenden Ansprüche,
**dadurch gekennzeichnet,**
**dass** durch die Netzzugangseinrichtung (ED) eine mit dem Kommunikationsdatenstrom (RTP3) übertragene Dienstgüteinformation (DI) abhängig von der Prüfung der Autorisierungsinformation überschrieben wird.

15. Netzzugangseinrichtung (ED) mit Mitteln zur Durchführung des Verfahrens nach einem der vorhergehenden Ansprüche.

16. Ressourcenmanager (RM) mit Mitteln durch Durchführung des Verfahrens nach einem der Ansprüche 2 bis 4 und 7 bis 9.

17. Kommunikationseinrichtung (RTP1, RTP2, RTP3) mit Mitteln zur Durchführung des Verfahrens nach einem der Ansprüche 1 bis 14.

## Claims

1. Method for ensuring the quality of service for communication data flows in a communication network (LAN) whereby
a) using a communication data flow (RTP1, RTP2, RTP3) transmitted within the framework of an approved communication link from a communication device (E1, E2, E3) to a network access device (ED) of the communication network (LAN), quality of service information (DI) and quality of service-specific, data-flow-specific and/or communication-device-specific authorization information (AI1, AI2) is conveyed,
b) the authorization information (AI1, AI2) is checked by the network access device (ED), and
c) depending on the result of the check, the communication data flow (RTP1, RTP2, RTP3) is allocated by the network access device (ED) to a quality of service class (DK1, DK2) determined using the quality of service information (DI) and forwarded over the communication network (LAN).

2. Method according to Claim 1,
***characterized in that***
the authorization information (AI1, AI2) to be transmitted is transmitted to the communication device (E1, E2, E3) by a resource manager (RM) administering quality of service resources of the communication network (LAN) if a quality of service request from the communication device (E1, E2, E3) has been approved by the resource manager (RM).

3. Method according to Claim 2,
***characterized in that***
the authorization information (AI1, AI2) is also transmitted by the resource manager (RM) to the network access device (ED), and
**in that** the network access device (ED) checks the authorization information transmitted with the communication data flow (RTP1, RTP2, RTP3) using the authorization information transmitted by the resource manager (RM).

4. Method according to Claim 2 or 3,
***characterized in that***
depending on a modification of currently requested and/or available quality of service resources, modified authorization information is transmitted by the resource manager (RM).

5. Method according to one of the preceding claims,
***characterized in that**,*
after stopping the communication data flow (RTP1, RTP2, RTP3), the authorization information (AI1, AI2) is registered as invalid.

6. Method according to one of the preceding claims,
***characterized in that***
the transmitted quality of service-specific, data-flow-specific and/or communication-device-specific authorization information (AI1, AI2) is checked by the network access device (ED) specifically with respect to quality of service, data flow and/or communication device.

7. Method according to one of Claims 2 to 6,
***characterized in that***
the authorization information (AI1, AI2) is transmitted from the resource manager (RM) to the communication device (E1, E2, E3) by means of a secured transmission protocol.

8. Method according to one of Claims 2 to 7,
***characterized in that***
a) instead of the authorization information, signature key information is in each case transmitted from the resource manager (RM) to the communication device (E1, E2, E3) and to the network access device (ED),
b)in that the communication device (E1, E2, E3) calculates the authorization information to be transmitted (AI1, AI2) by combining the signature key information that it has received with data to be transmitted to the network access device (ED), and
c)in that the network access device (ED) checks the transmitted authorization information (AI1, AI2) using the signature key information that it has received.

9. Method according to Claim 8,
***characterized in that***
time information is included in the calculation of the authorization information (AI1, AI2).

10. Method according to one of the preceding claims,
***characterized in that***
the authorization information (AI1, AI2) is transmitted within a packet header of a data packet of the communication data flow (RTP1, RTP2, RTP3).

11. Method according to Claim 10,
***characterized in that***
a flag in the packet header of the data packet indicates whether the packet header includes authorization information.

12. Method according to Claim 11,
***characterized in that***
the authorization information (AI1, AI2) is transmitted in a standardized extension to the packet header of the RTP, RTP: real time protocol.

13. Method according to Claim 12,
***characterized in that***
by authorizing the communication data flow according to the RTP, a data flow according to the RTCP, RTCP: real time control protocol, allocated to the communication data flow is also authorized.

14. Method according to one of the preceding claims,
***characterized in that***
the network access device (ED) overwrites quality of service information (DI) transmitted with the communication data flow (RTP3) depending on the check of the authorization information.

15. Network access device (ED) having means for executing the method according to one of the preceding claims.

16. Resource manager (RM) having means for executing the method according to one of Claims 2 to 4 and 7 to 9.

17. Communication device (RTP1, RTP2, RTP3) having means for executing the method according to one of Claims 1 to 14.

## Revendications

1. Procédé pour sécuriser la qualité de service pour des flux de données de communication dans un réseau de communication (LAN), dans lequel
a) une information de qualité de service (DI) ainsi qu'une information d'autorisation (AI1, AI2), spécifique à la qualité du service, spécifique au flux de données et/ou spécifique au dispositif de communication, sont transmises avec un flux de données de communication (RTP1, RTP2, RPT3) transmis par un dispositif de communication (E1, E2, E3) à un dispositif d'accès au réseau (ED) du réseau de communications (LAN) dans le cadre d'une connexion de communication permise,
b) l'information d'autorisation (AI1, AI2) est vérifiée par le dispositif d'accès au réseau (ED) et
c) le flux de données de communication (RTP1, RTP2, RTP3) est affecté à une classe de qualité de service (DK1, DK2), déterminée en fonction du résultat de la vérification par le dispositif d'accès au réseau (ED), à l'aide de l'information de qualité de service (DI) et est transmis par l'intermédiaire du réseau de communication (LAN).

2. Procédé selon la revendication 1,
**caractérisé en ce**
**que** l'information d'autorisation (AI1, AI2) à transmettre est transmise au dispositif de communication (E1, E2, E3) par un gestionnaire de ressources (RM), gérant des ressources de qualité de service du réseau de communication (LAN), au cas où une demande de qualité de service du dispositif de communication (E1, E2, E3) est permise par le gestionnaire de ressources (RM).

3. Procédé selon la revendication 2,
**caractérisé en ce**
**que** l'information d'autorisation (AI1, AI2) est également transmise par le gestionnaire de ressources (RM) au dispositif d'accès au réseau (ED) et
en ce que le dispositif d'accès au réseau (ED) vérifie l'information d'autorisation transmise avec le flux de données de communication (RTP1, RTP2, RTP3) à l'aide de l'information d'autorisation transmise par le gestionnaire de ressources (RM).

4. Procédé selon la revendication 2 ou 3,
**caractérisé en ce**
**qu'**une information d'autorisation modifiée est transmise par le gestionnaire de ressources (RM) en fonction d'une modification de ressources de qualité de service demandées momentanément et/ou disponibles momentanément.

5. Procédé selon l'une quelconque des revendications précédentes,
**caractérisé en ce**
**qu'**après la déconnexion du flux de données de communication (RTP1, RTP2, RTP3), l'information d'autorisation (AI1, AI2) est enregistrée comme invalide.

6. Procédé selon l'une quelconque des revendications précédentes,
**caractérisé en ce**
**que** l'information d'autorisation (AI1, AI2) transmise, spécifique à la qualité du service, spécifique au flux de données et/ou spécifique au dispositif de communication, est vérifiée par le dispositif d'accès au réseau (ED) du point de vue spécifique à la qualité du service, du point de vue spécifique au flux de données et/ou du point de vue spécifique au dispositif de communication.

7. Procédé selon l'une quelconque des revendications 2 à 6,
**caractérisé en ce**
**que** l'information d'autorisation (AI1, AI2) est transmise par le gestionnaire de ressources (RM) au dispositif de communication (E1, E2, E3) au moyen d'un protocole de transmission sécurisé.

8. Procédé selon l'une quelconque des revendications 2 à 7,
**caractérisé en ce**
a) qu'au lieu de l'information d'autorisation, une information de clé de signature est respectivement transmise par le gestionnaire de ressources (RM) au dispositif de communication (E1, E2, E3) et au dispositif d'accès au réseau (ED),
b) en ce que le dispositif de communication (E1, E2, E3) calcule l'information d'autorisation (AI1, AI2) à transmettre par connexion de l'information de clé de signature reçue par lui à des données à transmettre au dispositif d'accès au réseau (ED) et
c) en ce que le dispositif d'accès au réseau (ED) vérifie l'information d'autorisation transmise (AI1, AI2) à l'aide de l'information de clé de signature reçue par lui.

9. Procédé selon la revendication 8,
**caractérisé en ce**
**qu'**une information de temps est prise en compte dans le calcul de l'information d'autorisation (AI1, AI2).

10. Procédé selon l'une quelconque des revendications précédentes,
**caractérisé en ce**
**que** l'information d'autorisation (AI1, AI2) est transmise dans un en-tête de paquet d'un paquet de données du flux de données de communication (RTP1, RTP2, RTP3).

11. Procédé selon la revendication 10,
**caractérisé en ce**
**qu'**il est indiqué par un marqueur dans l'en-tête de paquet du paquet de données si l'en-tête de paquet contient une information d'autorisation.

12. Procédé selon la revendication 11,
**caractérisé en ce**
**que** l'information d'autorisation (AI1, AI2,) est transmise dans une extension d'en-tête de paquet standardisée du protocole RTP, RTP : Real Time Protocol.

13. Procédé selon la revendication 12,
**caractérisé en ce**
**qu'**un flux de données selon le protocole RTCP, RTCP : Real Time Control Protocol, affecté au flux de données de communication, est également autorisé par une autorisation du flux de données de communication selon le protocole RTP.

14. Procédé selon l'une quelconque des revendications précédentes,
**caractérisé en ce**
**qu'**une information de qualité de service (DI) transmise avec le flux de données de communication (RTP3) par le dispositif d'accès au réseau (ED) est écrasée en fonction de la vérification de l'information d'autorisation.

15. Dispositif d'accès au réseau (ED) comprenant des moyens pour la réalisation du procédé selon l'une quelconque des revendications précédentes.

16. Gestionnaire de ressources (RM) comprenant des moyens pour la réalisation du procédé selon l'une quelconque des revendications 2 à 4 et 7 à 9.

17. Dispositif de communication (RTP1, RTP2, RTP3) comprenant des moyens pour la réalisation du procédé selon l'une quelconque des revendications 1 à 14.
